# EUROPÄISCHE PATENTSCHRIFT

(11) **EP 2 000 681 B1**
(45) Veröffentlichungstag und Bekanntmachung des Hinweises auf die Patenterteilung: **23.05.2012**
(21) Anmeldenummer: 08006071.8
(22) Anmeldetag: 28.03.2008
(51) Int. Cl.: F16B 37/04, F16B 41/00, F16B 43/00

(54) **Stützhülse**
Support sleeve
Manchon support

(30) Priorität: 08.06.2007 DE 102007026568
(43) Veröffentlichungstag der Anmeldung: 10.12.2008
(73) Patentinhaber: EJOT GmbH & Co. KG, 57334 Bad Laasphe (DE)
(72) Erfinder: Kind, Andreas, 99897 Tambach-Dietharz (DE); Pinzl, Wilfried, Dr., 99897 Tambach-Dietharz (DE)
(74) Vertreter: Bardehle, Heinz

(56) Entgegenhaltungen:
- DE-A1- 10 254 999
- DE-A1- 19 653 226
- DE-U1- 29 804 041

## Beschreibung

Die Erfindung bezieht sich auf eine in einen Durchbruch eines Bauteils einbringbare und in diesem durch Radialspannung gehaltene metallische Stützhülse, deren Loch von einer in einen Träger eindrehbaren Schraube mit Schraubenkopf zur Befestigung des Bauteils an dem Träger durchsetzt ist, die mit einem über eine Anfangslänge der Schraube sich erstreckenden Gewinde und danach mit einem bis zum Schraubenkopf reichenden gewindefreien Schaft versehen ist.

Eine derartige Stützhülse ist in der EP 1 468 199 B1 offenbart. Diese bekannte Stützhülse ist als geschlossener Ring ausgebildet, dem durch mehrere, axial verlaufende, sich über die gesamte Länge der Stützhülse erstreckende Einbuchtungen eine radiale Flexibilität gegeben ist, so dass sich die Stützhülse unter Aufrechterhaltung einer nach außen gerichteten radialen Spannung in einen Durchbruch eines Bauteils einsetzen lässt und in diesem durch die innewohnende Spannung festgehalten wird. Derartige Stützhülsen werden in großem Umfang in der Automobilindustrie im Zusammenhang mit Motoranbauteilen verwendet, für deren Befestigung Schrauben zusammen mit von diesen getragenen Stützhülsen angeliefert werden, wobei die Forderung besteht, dass die Schrauben unverlierbar von den Stützhülsen getragen werden. Eine zusätzliche Forderung für die Verwendung derartiger Stützhülsen besteht darin, dass das Gewinde der Schrauben kürzer sein muss als die Länge der Stützhülse, so dass das Gewinde nicht aus der Stützhülse herausragt, um bei der Zusammenfügung der miteinander zu verschraubenden Bauteile nicht das Auffinden von Durchbrüchen und den jeweils zugehörigen Schraubenlöchern durch die zur Befestigung der Anbauteile dienenden Schrauben zu erschweren. Diese Forderung bedeutet, dass die jeweilige Schraube nicht aus ihrer Stützhülse herausragt, bevor sie auf den betreffenden Träger mit seinem Gewindeloch aufgesetzt ist. Dies erfordert häufig eine erhebliche Länge dieser Stützhülsen, was für ihre Verwendung im Falle des Einsetzens in ein besonders dünnes Beauteil hinderlich wäre. Der Erfindung liegt daher die Aufgab zugrunde, eine Stützhülse zu schaffen, die hinsichtlich ihrer Länge variabel ist und so mit verschiedenen Schraubenlängen, insbesondere langen Schrauben, ohne weiteres verwendbar ist, wodurch das Zusammenfinden von Bauteil und Träger erleichtert wird.

In der DE 298 04 041 U1 ist eine als Montagehilfe dienende Hülse beschrieben, die dazu dient, zunächst eine Befestigungsschraube unverlierbar zu halten. Die Hülse wird in einem Trägerteil eingesetzt in der sie von einem radial zusammendrückbaren, die Hülse umgebenden Montagering eingeklemmt wird.

Eine ähnliche Gestaltung ist in der DE 102 54 999 A1 beschrieben, gemäß der ein als Hülse ausgebildeter Abstandshalter von einem separaten Federelement umgriffen ist, das durch einerseits an dem Abstandshalter und andererseits an einer Außenfläche eines Teilabschnitts anliegt, in das die Hülse eingesetzt wird.

Erfindungsgemäß geschieht dies dadurch, dass die Stützhülse aus zwei ineinander teleskopartig einschiebbaren, metallischen Hülsenelementen besteht, deren inneres Hülsenelement an seinem dem Schraubenkopf zugewandten Ende mit einem nach innen ragenden Bund versehen ist, der hinter das Gewindeende der Schraube im Bereich von deren gewindefreien Schaft greift und mit seinem dem Schraubenkopf abgewandten Ende mit einem nach außen ragenden Bund hinter nach innen ragende Vorsprünge im Bereich von dem dem Schraubenkopf zugewandten Ende des äußeren Hülsenelementes greift, wobei der gewindefreie Schaft und das Gewinde zusammen eine solche Länge aufweisen, dass bei auseinander geschobener Stützhülse und hinter das Gewindeende greifendem Bund des inneren Hülsenelementes das Gewinde nicht aus dem äußeren Hülsenelement heraus ragt und bei zusammen geschobener Stützhülse und in den Träger eingedrehter Schraube das äußere Hülsenelement den Schraubenkopf gegen den Träger abstützt.

Eine teleskopartige Gestaltung von Stützhülsen ist an sich bekannt. So zeigt die EP 0 389 783 B1 (entsprechend DE 690 01 083 D2) eine Stützhülse, die teleskopartig von einer Dichtungshülse umgeben ist, mit der eine besonders gute Abdichtung der miteinander zu verbindenden Bauteile erzielbar ist. Dabei wird die die eigentliche metallische Stützhülse umgebende Dichtungshülse aus einem elastischen Werkstoff beim Anziehen der betreffenden Schraube intensiv zusammengequetscht und sorgt damit dafür, dass im Bereich der Zusammenfügung der miteinander zu verbindenden Bauteile keine Undichtigkeiten bestehen können, womit insbesondere das Heraustreten von Öl mit Sicherheit vermieden werden soll. Irgendwelche Stützungsfunktionen übt dabei die Dichtungshülse nicht aus. In der DE 37 84 325 D2 (= EP 0 272 642 B1) ist eine ähnlich gestaltete Stützhülse mit einer die eigentliche metallische Stützhülse umgebende Dichtungshülse offenbart, die durch Verwendung eines elastischen Werkstoffs für die Dichtungshülse eine sichere Abdichtung zwischen den zu verbindenden Bauteilen gewährleisten soll. Auch bei dieser bekannten Gestaltung übt die Dichtungshülse keinerlei Stützfunktion aus. Die mit metallischen Stützhülsen, bestehend jeweils aus einer einzigen Hülse, sich ergebende Problematik einer sicheren Abstützung bei besonders langen Schrauben und die damit verbundene Schwierigkeit des Zusammenfindens der Durchbrüche in den zu verbindenden Teilen wird also bei dem Stand der Technik, der sich auf die genannten Dichtungshülsen bezieht, nicht beseitigt.

Die aus zwei ineinander teleskopartig einschiebbaren metallischen Hülsenelementen bestehende Stützhülse hält zunächst die Schraube im Bereich ihres gewindefreien Schaftes fest, womit ein unverlierbarer Verbund vorliegt. Dabei halten die auseinander geschobenen Hülsenelemente die Schraube zunächst in einer Lage, in der ihr dem Schraubenkopf abgewandtes Gewindeende nicht aus dem äußeren Hülsenelement herausragt, so dass in dieser Position eine lagerichtige Positionierung von Bauteil und Träger mit auseinandergezogener metallischer Stützhülse ohne störende Schraubenenden möglich ist. Auf diese Weise werden bei einer Schraubverbindung von Träger und Bauteil mittels einer größeren Zahl von Schrauben diese in die durchgehend richtige Position gebracht, woraufhin dann die Schrauben durch das innere Hülsenelement gedreht werden, um dabei in die betreffenden Schraubenlöcher des Trägers sich einzupassen, womit über eine größere Fläche bzw. Umfang eine sichere passende Zusammenfügung von Träger und Bauteil erzielt ist. Dabei schiebt sich jeweils das innere Hülsenelement in das äußere Hülsenelement, bis das äußere Hülsenelement die Stützfunktion der Stützhülse übernimmt, indem es einerseits Kontakt mit dem Schraubenkopf aufnimmt und andererseits gegen den Träger drückt, womit die notwendige und gewünschte Stützfunktion zwischen Schraube und Träger erzielt ist.

Die Stützhülse lässt sich folgendermaßen gestalten. Zunächst ist es vorteilhaft, dem äußeren Hülsenelement höchstens eine Länge zu geben, die gleich der Länge des Gewindes ist. Dabei ist es möglich, die Länge des äußeren Hülsenelementes kürzer als die Länge des Gewindes auszubilden.

Eine weitere zweckmäßige Anpassbarkeit von Gewinde und Stützhülse besteht darin, dass bei auseinander geschobener Stützhülse deren Länge höchstens gleich als die Länge des Gewindes ist, insbesondere größer sein kann.

Der nach innen ragende Bund des inneren Hülsenelementes, mit dem dieser hinter das Gewinde der Schraube deren Schaft umgreift, kann als durchgehender Ringbund dem inneren Hülsenelement eingeprägt werden, es besteht aber auch die Möglichkeit, diesen Bund mit Unterbrechungen zu gestalten, so dass nur an einigen Stellen des inneren Hülsenelementes der Bund nach innen einzuprägen ist.

Um eine Verrasterung zwischen äußerem Hülsenelement und innerem Hülsenelement zu erzielen, kann man vorteilhaft am äußeren Hülsenelement nach innen ragende Einbuchtungen vorsehen, die den Vorsprüngen am äußeren Hülsenelement derart benachbart sind, dass der Bund am inneren Hülsenelement zwischen die Vorsprünge und die Einbuchtungen einrastbar ist. Diese Gestaltung hat den Vorteil, dass beim Zusammenfügen der beiden Hülsenelemente das innere Hülsenelement mit seinen nach außen ragenden Bund zwischen Vorsprünge und die nach innen ragenden Einbuchtungen am äußeren Hülsenelement einrastet, wobei diese Verrasterung aber keine Befestigung ist, sondern es nach wie vor erlaubt, dass das innere Hülsenelement beim Verschrauben aus dem Zwischenraum zwischen den nach innen ragenden Vorsprüngen und Einbuchtungen am äußeren Hülsenelement ausrasten, womit sich das innere Hülsenelement dann leicht gegenüber dem äußeren Hülsenelement verschieben lässt, bis beide Hülsenelemente praktisch nebeneinander liegen.

Um in der Stellung vor Einschrauben der Schraube diese mit ihrem Gewinde im inneren Hülsenelement zu halten, kann man das innere Hülsenelement so gestalten, dass es den Schaft der Schraube klemmend hält.

Um die Abstützung des äußeren Hülsenelementes gegen den Träger zu stärken, kann man an dem äußeren Hülsenelement auf seiner dem Schraubenkopf abgewandten Seite einen Flansch zur Auflage an dem Träger anordnen.

In den Figuren sind Ausführungsbeispiele der Erfindung dargestellt. Es zeigen:
- Figuren 1a, b und c: eine perspektivische Darstellung der auseinandergezogenen Teile der Stützhülse mit Schraube, und zwar jeweils allein die Schraube, das innere Hülsenelement und das äußere Hülsenelement;
- Figur 2: die Stützhülse mit Schraube, wobei das innere und das äußere Hülsenelement im Schnitt gezeichnet sind;
- Figur 3: die Schraube mit der aus Figur 2 ersichtlichen Stützhülse, wobei das innere Hülsenelement in das äußere Hülsenelement eingeschoben ist;
- Figur 4: einen Schnitt längs der Linie IV-IV aus Figur 2;
- Figur 5: Schraube und Stützhülse, wie dargestellt in Figur 2, und zwar eingesetzt in den Durchbruch eines Bauteils, das auf einem Träger aufliegt;
- Figur 6: die in den Träger eingedrehte Schraube mit im Bereich des Durchbruchs zusammen geschobenen Hülsenelementen;
- Figur 7: eine Anordnung ähnlich Figur 2, wobei das äußere Hülsenelement gleich der Länge des Gewindes ist;
- Figur 8: eine Anordnung ähnlich Figur 7, wobei die Länge des Gewindes gleich der Länge der auseinander geschobenen Stützhülse ist;
- Figur 9: eine Stützhülse mit äußerem Hülsenelement, in das das innere Hülsenelement eingerastet ist, wobei das äußere Hülsenelement einen Flansch besitzt.

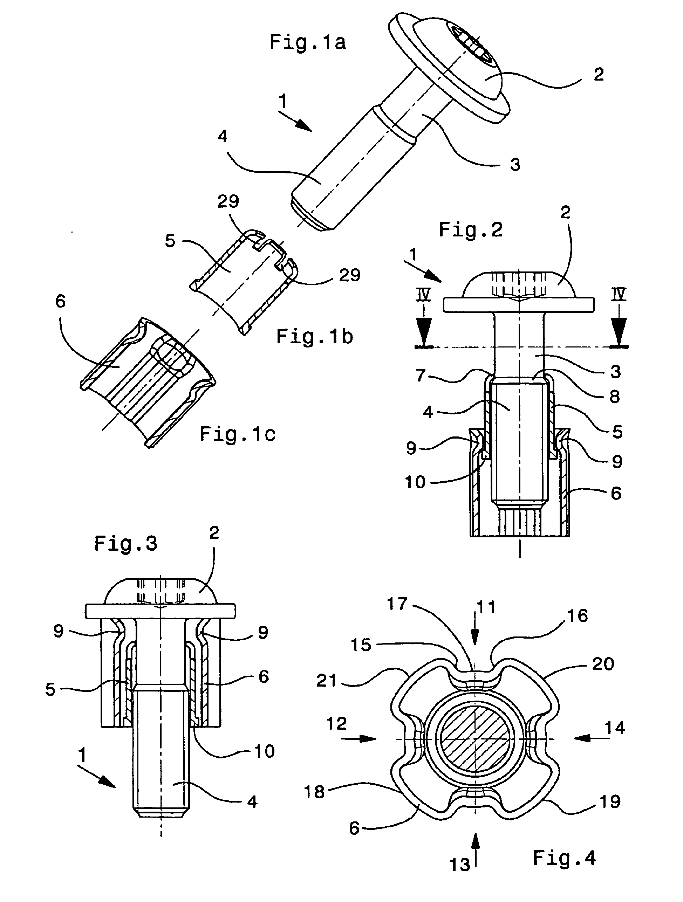

In den Figuren 1a, b und c ist die Schraube 1 mit dem Schraubenkopf 2, einem gewindefreien Schaft 3 und dem Gewinde 4 dargestellt. Diese Schraube ist in eine Stützhülse einsetzbar, die aus den beiden in den Figuren 1b und 1c dargestellten Hülsenelementen, nämlich dem inneren mit Unterbrechungen 29 versehenen Hülsenelement 5 und dem äußeren Hülsenelement 6, zusammenfügbar ist. Das innere Hülsenelement 5 und das äußere Hülsenelement 6 sind zusammenschiebbar und in Figur 2 in auseinandergezogener Lage mit hindurch gedeckter Schraube 1 dargestellt. Gemäß Figur 2 hängt das innere Hülsenelement 5 mit seinem nach innen ragenden Bund 7 auf dem dem Schraubenkopf 2 zugewandten Gewindeende 8. Das innere Hülsenelement 5 ist in das äußere Hülsenelement 6 so eingeschoben, dass an der dargestellten Lage das äußere Hülsenelement 6 mit nach innen ragenden Vorsprüngen 9 an dem nach außen ragenden Bund 10 am Ende des inneren Hülsenelementes 5 hängt, so dass das äußere Hülsenelement 6 unverlierbar mit dem inneren Hülsenelement 5 axial verschiebbar verbunden ist.

Die beiden Hülsenelemente 5 und 6 können axial zusammengeschoben werden und gegen den Kopf 2 der Schraube 1 verschoben werden, wo sie dann eine Lage einnehmen, wie sie in der Figur 3 dargestellt ist.

In der Figur 4 ist die Stützhülse gemäß den Figuren 1 bis 3 im Schnitt längs der Linie IV-IV dargestellt. Um dem äußeren Hülsenelement 6 eine radiale Flexibilität zu geben, ist diese in Anlehnung an die Gestaltung der Stützhülse gemäß der oben erwähnten EP 1 468 199 B1 mit vier Einbuchtungen 11, 12, 13 und 14 versehen, die jeweils durch die beiden Wände 15 und 16 sowie den Boden 17 gebildet werden. Zwischen den Einbuchtungen 11, 12, 13 und 14 erstrecken sich diese verbindende Wülste 18, 19, 20 und 21. Diese Gestaltung des äußeren Hülsenelementes 6 gestattet es, dieses aufgrund der federnden Nachgiebigkeit des Stützhülsenmaterials radial zusammenzudrücken und dabei in einen Durchbruch eines Bauteils einzuführen, dessen Durchmesser geringer ist als der Durchmesser des in entspannter Lage in Figur 4 dargestellten äußeren Hülsenelementes 6. Diese Wirkungsweise ist in der oben erwähnten EP 1 468 199 B1 ausführlich beschrieben, worauf in diesem Zusammenhang Bezug genommen wird.

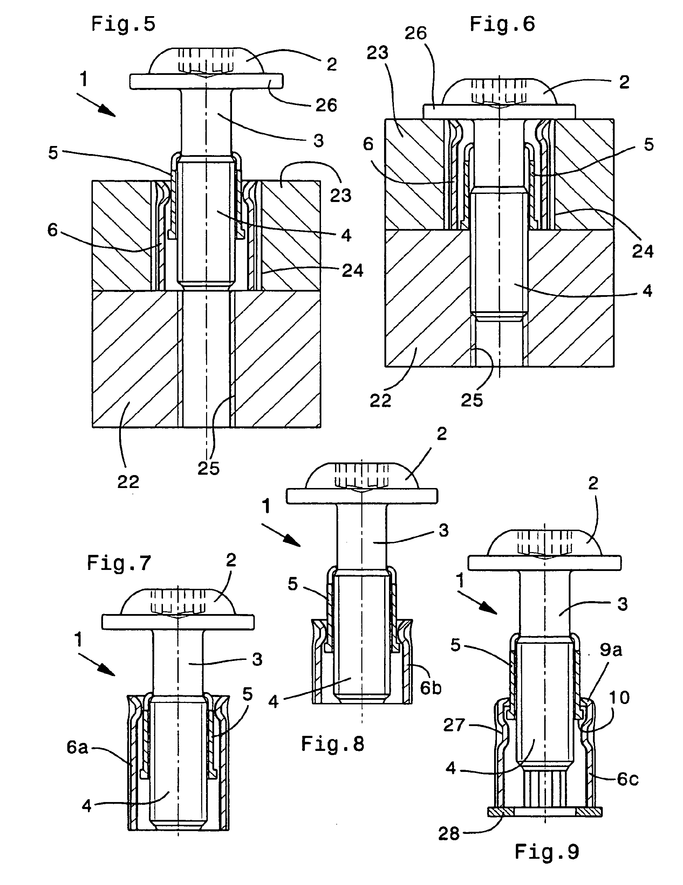

Anhand der Figuren 5 und 6 sei die Zusammenfügung von Schraube 1 mit innerem Hülsenelement 5 und äußerem Hülsenelement 6 mit dem Träger 22 und dem daran zu befestigenden Bauteil 23 dargestellt. In den Durchbruch 24 des zunächst lose auf den Träger 22 aufgelegten Bauteils 23 wird das äußere Hülsenelement 6 eingeschoben, das sich dabei federnd an die Wandung des Durchbruchs 24 anlegt (siehe Erläuterungen zu Figur 4), wodurch sich eine Führung für die hindurchragende Schraube 1 mit ihrem Gewinde 4 ergibt, so dass diese in das Muttergewinde 25 des Trägers 22 findet und in dieses Muttergewinde eingeschraubt werden kann.

In eingeschraubter Lage ist die Schraube 1 in Figur 6 dargestellt. Die Schraube 1 ragt mit ihrem Gewinde 4 mit einem erheblichen Teil in das Muttergewinde 25 hinein, wobei schließlich die Scheibe 26 des Schraubenkopfes 2 sowohl auf das Bauteil 23 als auch das äußere Hülsenelement 6 auftrifft, welch letzteres nunmehr die Abstützung zwischen der Scheibe 26 und dem Träger 22 bildet, so dass durch die Stützwirkung des äußeren Hülsenelementes 6 das gegebenenfalls druckempfindliche Bauteil 23 nicht zusammengedrückt werden kann. Bei diesem Vorgang des Einschraubens hat sich das innere Hülsenelement 5 in das äußere Hülsenelement 6 eingeschoben (siehe Figur 3).

In den Figuren 7 und 8 sind Varianten der Gestaltung von innerem und äußerem Hülsenelement 5, 6 sowie der Länge des Gewindes 4 dargestellt.

Gemäß Figur 7 hat das äußere Hülsenelement 6a die gleiche Länge wie die Länge des Gewindes 4.

Bei der Ausführungsform gemäß Figur 8 ist die Länge der auseinander geschobenen Stützhülse 5, 6 gleich der Länge des Gewindes 4.

Bei der Ausführungsform gemäß Figur 9 weist das äußere Hülsenelement 6c gegenüber den vorstehend behandelten Ausführungsformen eine Besonderheit auf. An seinem dem Schraubenkopf 2 zugewandten Ende besitzt das äußere Hülsenelement 6c einen nach innen gerichteten Vorsprung 9a, der sich hinter den nach außen ragenden Bund 10 des inneren Hülsenelementes 5 abstützt und damit das Abziehen des äußeren Hülsenelementes 6c von dem inneren Hülsenelement 5 verhindert. Darüber hinaus besitzt das äußere Hülsenelement 6c in geringem Abstand zu dem Vorsprung 9a eine Einbuchtung 27, die verhindert, dass sich das äußere Hülsenelement 6c ohne irgendeine Hemmung über das innere Hülsenelement 5 schieben lässt. Insofern liegt eine Gestaltung vor, bei der inneres Hülsenelement 5 und äußeres Hülsenelement 6c eine eingerastete Lage zueinander besitzen, aus der das äußere Hülsenelement 6c nur unter Überwindung des Bundes 10 am inneren Hülsenelement 5 geschoben werden kann. Darüber hinaus besitzt das dem Schraubenkopf 2 abgewandte Ende des äußeren Hülsenelementes 6c den Flansch 28, mit dem sich das äußere Hülsenelement 6c besonders sicher auf einem Träger (siehe Träger 22 in Figur 5) abstützen kann, womit das äußere Hülsenelement 6c in einer Lage entsprechend derjenigen gemäß Figur 6 eine besondere Stützkraft ausüben kann.

## Patentansprüche

1. In einen Durchbruch (24) eines Bauteils (23) einbringbare und in diesem durch Radialspannung gehaltene metallische Stützhülse (5, 6), deren Loch von einer in einen Träger (22) eindrehbaren Schraube (1) mit Schraubenkopf (2) zur Befestigung des Bauteils (23) an dem Träger (22) durchsetzt ist, die mit einem über eine Anfangslänge der Schraube (1) sich erstreckenden Gewinde (4) und danach mit einem bis zum Schraubenkopf (2) reichenden gewindefreien Schaft (3) versehen ist, **dadurch gekennzeichnet, dass** die Stützhülse (5, 6) aus zwei ineinander teleskopartig einschiebbaren, metallischen Hülsenelementen besteht, deren inneres Hülsenelement (5) an seinem dem Schraubenkopf (2) zugewandten Ende mit einem nach innen ragenden Bund (7) versehen ist, der hinter das Gewindeende (8) der Schraube (1) im Bereich von deren gewindefreien Schaft (3) greift und mit seinem dem Schraubenkopf (2) abgewandten Ende mit einem nach außen ragenden Bund (10) hinter nach innen ragende Vorsprünge (9) im Bereich von dem dem Schraubenkopf (2) zugewandten Ende des äußeren Hülsenelementes (6) greift, wobei der gewindefreie Schaft (3) und das Gewinde (4) zusammen eine solche Länge aufweisen, dass bei auseinander geschobener Stützhülse und hinter das Gewindeende (8) greifendem Bund (7) des inneren Hülsenelementes (5) das Gewinde (4) nicht aus dem äußeren Hülsenelement (6) herausragt und bei zusammen geschobener Stützhülse (5) und in den Träger (22) eingedrehter Schraube (1) das äußere Hülsenelement (6) den Schraubenkopf (2) gegen den Träger (22) abstützt.

2. Stützhülse nach Anspruch 1, **dadurch gekennzeichnet, dass** die Länge des äußeren Hülsenelements (6) höchstens gleich der Länge des Gewindes (4) ist.

3. Stützhülse nach Anspruch 1 oder 2, **dadurch gekennzeichnet, dass** bei auseinander geschobener Stützhülse (5, 6) deren Länge höchstens gleich der Länge des Gewindes (4) ist.

4. Stützhülse nach einem der Ansprüche 1 bis 3, **dadurch gekennzeichnet, dass** der nach innen ragende Bund (7) Unterbrechungen (29) aufweist.

5. Stützhülse nach einem der Ansprüche 1 bis 4, **dadurch gekennzeichnet, dass** den nach innen ragenden Vorsprüngen (9a) am äußeren Hülsenelement (6c) nach innen ragende Einbuchtungen (27) derart benachbart sind, dass der nach außen ragende Bund (10) am inneren Hülsenelement (5) zwischen die Vorsprünge (9a) und die Einbuchtungen (27) einrastbar ist.

6. Stützhülse nach einem der Ansprüche 1 bis 5, **dadurch gekennzeichnet, dass** der Schaft (3) in dem inneren Hülsenelement (5) klemmend gehalten ist.

7. Stützhülse nach einem der Ansprüche 1 bis 6, **dadurch gekennzeichnet, dass** das äußere Hülsenelement (6) auf seiner dem Schraubenkopf (2) abgewandten Seite einen Flansch (28) zur Auflage an dem Träger (22) trägt.

## Claims

1. Into an opening (24) of a component (23) insertable and therein held by radial clamping metallic support sleeve (5, 6), the hole of which is passed by a screw (1) with a screw head (2) for attachment of the component (23) on the support (22) the screw adapted to be screwed into a carrier (22), which sleeve is provided with a thread (4) extending across an initial length of the screw and then with an unthreaded shank (3) reaching up to the screw head (2), **characterized in that** the support sleeve (5, 6) consists of two interlocking telescopically insertable, metallic sleeve members, the inner sleeve member (5) of which is provided at its end facing the screw head (2) with an inwardly projecting collar (7) which grips behind the threaded end (8) of the screw (1) in the area of the unthreaded shank (3) and which grips with its end facing away from the screw head (2) with an outwardly projecting collar (10) behind inwardly projecting projections (9) in the area of the end of the outer sleeve member (6) facing the screw head (2), wherein the unthreaded shank (3) and the thread (4) together have such a length, that with the support sleeve pushed apart and the threaded end (8) gripping behind the collar (7) of the inner sleeve member (5), the thread (4) does not project from the outer sleeve member (6); and with the telescoped support sleeve (5) pushed into the carrier (22) and the screw (1) screwed into the carrier (22), the outer sleeve member (6) supports the screw head (2 ) against the carrier (22).

2. Supporting sleeve according to claim 1, **characterized in that** the length of the outer sleeve member (6) is at most equal to the length of the thread (4).

3. Supporting sleeve according to claim 1 or 2, **characterized in that**, when pushed apart the length is of the supporting sleeve (5, 6) is at most equal to the length of the thread (4).

4. Support sleeve according to one of claims 1 to 3, **characterized in that** the inwardly projecting collar (7) comprises interruptions (29).

5. Support sleeve according to one of claims 1 to 4, **characterized in that** the inwardly projecting projections (9a) on the outer sleeve member (6c) are next to inwardly projecting indentations (27) such that the outwardly projecting collar (10) on the inner sleeve member (5) can be latched between the projections (9a) and the indentations (27).

6. Support sleeve according to one of claims 1 to 5, **characterized in that** the shaft (3) is held clamped in the inner sleeve member (5).

7. Support sleeve according to one of claims 1 to 6, **characterized in that** the outer sleeve member (6) carries a flange (28) on its side facing away from the screw head (2) for resting on the support (22).

## Revendications

1. Manchon support (5, 6) métallique pouvant être posé dans un passage (24) d'un élément de construction (23) et soutenu dans celui-ci par une tension radiale, dont le trou d'une vis (1) pouvant être engagée dans un support (22) contient une tête de vis (2) pour fixer l'élément de construction (23) sur le support (22), qui est pourvue d'un filetage (4) s'étendant sur une longueur initiale de la vis (1) et ensuite d'une tige (3) sans filetage allant jusqu'à la tête de vis (2), **caractérisé en ce que** le manchon support (5, 6) est composé de deux éléments de manchon métalliques insérables l'un dans l'autre de manière télescopique, dont l'élément de manchon intérieur (5) est pourvu d'un collet de butée (7) dépassant vers l'intérieur, sur son extrémité en face de la tête de vis (2), qui a prise derrière sur l'extrémité de filetage (8) de la vis (1) dans la zone de sa tige sans filetage (3) et avec son extrémité à l'opposé de la tête de vis (2), a prise avec un collet de butée (10) dépassant vers l'extérieur, sur des avancées (9) à l'arrière dépassant vers l'intérieur dans la zone de l'extrémité de l'élément de manchon (6) extérieur face à la tête de vis (2), sachant que la tige sans filetage (3) et le filetage (4) présentent ensemble une longueur de manière à ce que lorsque le manchon de support est déplacé pour être séparé et le collet de butée (7) ayant prise à l'arrière sur l'extrémité de filetage (8), de l'élément de manchon intérieur (5) le filetage ne déborde pas de l'élément de manchon extérieur (6) et lorsque le manchon de support (5) est enfilé et la vis (1) engagée dans le support (22), l'élément de manchon extérieur (6) appuie la tête de vis (2) contre le support (22).

2. Manchon de support selon revendication 1, **caractérisé en ce que** la longueur de l'élément de manchon extérieur (6) est au maximum égale à la longueur du filetage (4).

3. Manchon de support selon revendication 1 ou 2, **caractérisé en ce** lorsque le manchon de support (5, 6) est glissé pour être séparé, la longueur est au maximum égale à la longueur du filetage (4).

4. Manchon de support selon l'une des revendications 1 à 3, **caractérisé en ce que** le collet de butée (7) dépassant vers l'intérieur présente des creux (29).

5. Manchon de support selon l'une des revendications 1 à 4, **caractérisé en ce que** des rainures (27) dépassant vers l'intérieur sont contiguës à des creux dépassant vers l'intérieur (9a) sur l'élément de manchon (6c) de telle manière que le collet de butée (10) dépassant vers l'extérieur sur l'élément de manchon intérieur (5) peut être encliqueté entre les avancées (9a) est les rainures (27).

6. Manchon de support selon l'une des revendications 1 à 5, **caractérisé en ce que** la tige (5) est tenue par pincement dans l'élément de manchon intérieur (5).

7. Manchon de support selon l'une des revendications 1 à 6, **caractérisé en ce que** l'élément de manchon extérieur (6) porte une bride (28) sur son côté opposé à sa tête de vis (2) pour l'appui sur le support (22).
